# EUROPEAN PATENT APPLICATION

(11) **EP 4 746 165 A1**
(43) Date of publication of application: **20.05.2026**
(21) Application number: 24915417.0
(22) Date of filing: 26.12.2024
(51) Int. Cl.: H01M 50/342

(54) **BATTERY PACK**

(30) Priority: 03.01.2024 KR 20240001053
(71) Applicant: LG Energy Solution, Ltd., Seoul 07335 (KR)
(72) Inventor: KIM, Jin Hyuk, Daejeon 34122 (KR); LEE, Jae Hyun, Daejeon 34122 (KR); LEE, Hyoung Suk, Daejeon 34122 (KR)
(74) Representative: Plasseraud IP
(86) International application number: PCT/KR2024/021081
(87) International publication number: WO 2025/147005

(57) **Abstract**

Embodiments provide a battery pack. The battery pack includes a pack housing, a battery cell assembly, an upper cover, and a fire-resistant sheet interposed between the upper cover and the battery cell assembly and including a plurality of opening guides overlapping a plurality of exhaust holes, in which each of the plurality of opening guides includes first to third dashed lines spaced apart from one another in a first direction, each of the first to third dashed lines extends in a second direction perpendicular to the first direction, and the first dashed line is different from the second and third dashed lines.

## Description

### [Technical Field]

The present disclosure relates to a battery pack. The present application claims the benefit of priority based on Korean Patent Application No. 10-2024-0001053, filed on January 3, 2024, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

In a current trend toward emphasizing secondary batteries for mobility, the development of secondary battery technology is mainly aimed to reduce production costs and improve safety. A secondary battery account for a largest portion of manufacturing costs of a BEV. Therefore, a most important factor in increasing the share of BEVs compared to internal combustion engine vehicles is production costs of secondary batteries. Production costs can be reduced by reducing raw materials, reducing the number of steps in a production process, and reducing a tact time. The safety of secondary batteries is directly related to the lives of occupants of mobility and thus is very important. A main task for improving the safety of secondary batteries is to delay thermal propagation when a thermal runaway event occurs.

### [Disclosure]

### [Technical Problem]

The present disclosure is directed to providing a battery pack with improved safety.

### [Technical Solution]

Embodiments of the present disclosure provide a battery pack. The battery pack includes a pack housing including a base plate, a battery cell assembly provided on the base plate and including a plurality of battery cells, an upper cover provided on the battery cell assembly and including a plurality of exhaust holes, and a fire-resistant sheet interposed between the upper cover and the battery cell assembly and including a plurality of opening guides overlapping the plurality of exhaust holes, in which each of the plurality of opening guides includes first to third dashed lines spaced apart from one another in a first direction, each of the first to third dashed lines extends in a second direction perpendicular to the first direction, and the first dashed line is different from the second and third dashed lines.

The first dashed line may be interposed between the second and third dashed lines.

The first dashed line may include a plurality of first line segments arranged in the second direction, the second dashed line may include a plurality of second line segments arranged in the second direction, and the third dashed line may include a plurality of third line segments arranged in the second direction.

A length of each of the plurality of first line segments may be different from a length of each of the plurality of second line segments.

The length of each of the plurality of first line segments may be greater than a length of each of the plurality of second line segments.

The length of each of the plurality of first line segments may be different from a length of each of the plurality of third line segments.

The length of each of the plurality of first line segments may be greater than the length of each of the plurality of third line segments.

The length of each of the plurality of second line segments may be equal to the length of each of the plurality of third line segments.

Each of the plurality of opening guides may further include fourth and fifth dashed lines spaced apart from each other with the first to third dashed lines between the fourth and fifth dashed lines, the fourth dashed line may include a plurality of fourth line segments arranged in the second direction, and the fifth dashed line may include a plurality of fifth line segments arranged in the second direction.

A length of each of the plurality of fourth line segments may be equal to the length of each of the plurality of second line segments.

The length of each of the plurality of first line segments may be greater than the length of each of the plurality of fourth line segments.

A length of each of the plurality of fifth line segments may be equal to the length of each of the plurality of third line segments.

The length of each of the plurality of first line segments may be greater than the length of each of the plurality of fifth line segments.

### [Advantageous Effects]

A battery pack according to embodiments of the present disclosure may include fire-resistant sheets including improved opening guides. Accordingly, when a thermal runaway event occurs in a battery cell, the opening guide of a corresponding fire-resistant sheet can be quickly broken to delay thermal propagation due to the eruption of a gas and dust. Furthermore, when the thermal runaway event occurs, only a necessary portion of the opening guide of the fire-resistant sheet can be limitedly opened to prevent the thermal runaway event from spreading to battery cells in which the thermal runaway event does not occur.

Effects achievable from embodiments of the present disclosure are not limited to the above-described effects, and other effects that are not described herein will be clearly derived and understood by those of ordinary skilled in the art to which the embodiments of the present disclosure pertain from the following description. That is, unintended effects achieved when the embodiments of the present disclosure are implemented are derivable by those of ordinary skilled in the art from the embodiments of the present disclosure.

### [Brief Description of the Drawings]

FIG. 1 is a plan view for describing a battery pack according to embodiments.
FIG. 2 is a plan view for describing a battery pack according to embodiments.
FIG. 3 is an enlarged partial plan view of a part of FIG. 1.
FIG. 4 is a cross-sectional view taken along line 1I-1I' of FIG. 1.
FIG. 5 is a plan view for describing a battery pack according to embodiments.
FIG. 6 is an enlarged partial plan view of a part of FIG. 5.
FIG. 7 is a cross-sectional view taken along line 5I-5I' of FIG. 5.
FIG. 8 is a plan view for describing a battery pack according to embodiments.
FIG. 9 is an enlarged partial plan view of a part of FIG. 8.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

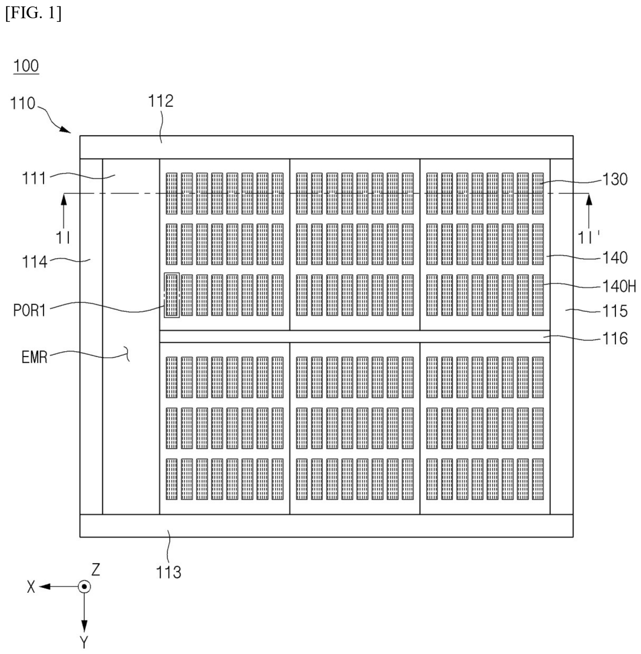

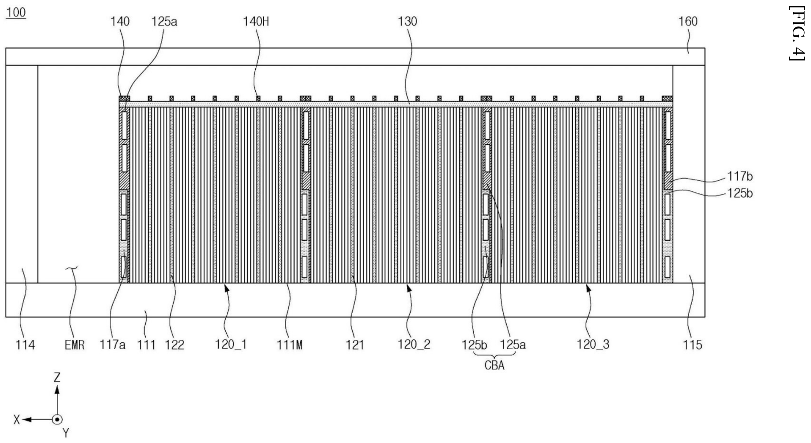

FIG. 1 is a plan view for describing a battery pack 100 according to embodiments. For more complete understanding of an arrangement of elements of the battery pack 100, a lid 150 (see FIG. 4) is omitted in FIG. 1.

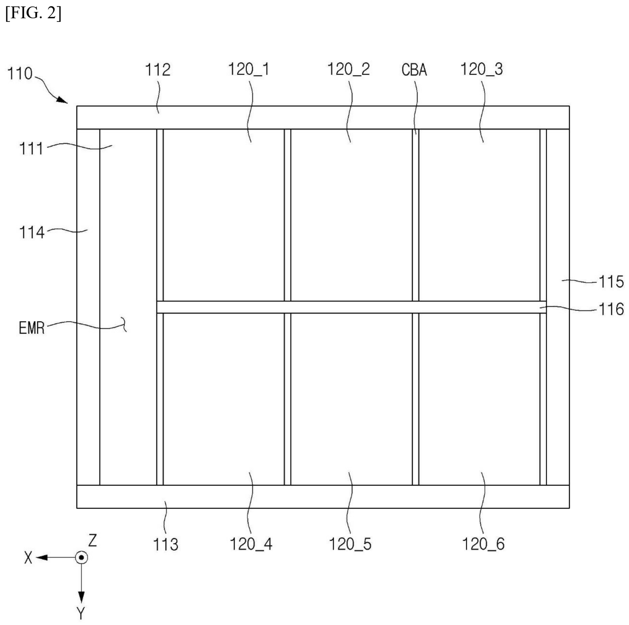

FIG. 2 is a plan view for describing the battery pack 100 of FIG. 1. When compared to FIG. 1, a fire-resistant sheet 130 and an upper cover 140 are omitted in FIG. 2.

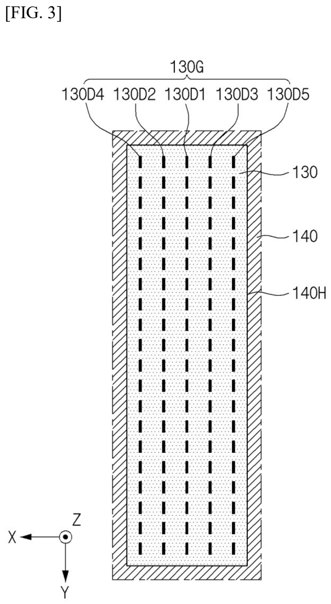

FIG. 3 is an enlarged partial plan view of a part POR of FIG. 1.

FIG. 4 is a cross-sectional view taken along line 1I-1I' of FIG. 1.

Referring to FIGS. 1 to 4, the battery pack 100 may include a housing 110, a plurality of battery cell assemblies 120_1, 120_2, 120_3, 120_4, 120_5 and 120_6 (hereinafter, the battery cell assemblies 120_1 to 120_6), fire-resistant sheets 130, upper covers 140, and the lid 150. The battery pack 100 is a final form of a battery system to be mounted in a mobility or the like.

The housing 110 may provide a space in which the plurality of battery cell assemblies 120_1 to 120_6 are arranged. The housing 110 may include a base plate 111, side walls 112, 113, 114, and 115, and a center beam 116.

Two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

Each of the base plate 111 and the side walls 112 and 113 may be provided by an extrusion process. An extrusion direction of each of the base plate 111 and the side walls 112 and 113 may be the X-axis direction. The base plate 111 and the side walls 112 and 113 may be arranged in the Y-axis direction. The side walls 114 and 115 may also be provided by the extrusion process.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate disposed at a center of the plurality of unit plates welded together by friction stir welding. Accordingly, the center beam 116 may be formed together with the center plate by the extrusion process and may be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120_1 to 120_6 may be on the base plate 111 of the housing 110. The base plate 111 may support the plurality of battery cell assemblies 120_1 to 120_6. The side walls 112, 113, 114, and 115 may horizontally surround the plurality of battery cell assemblies 120_1 to 120_6.

Each of the plurality of battery cell assemblies 120_1 to 120_6 may include a plurality of battery cells 121, a plurality of pads 122, a first cross-beam 125a, and a second cross-beam 125b.

Each of the plurality of battery cells 121 may be a lithium ion battery. Each of the plurality of battery cells 121 includes an electrode assembly, an electrolyte, and a case. Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series. The number of banks connected in series and the number of battery cells 121 included in the plurality of banks may be determined according to a voltage and a current to be output from each of the battery cell assemblies 120.

The plurality of pads 122 may be interposed between the plurality of battery cells 121. The plurality of pads 122 may horizontally press the plurality of battery cells 121 and prevent or alleviate the swelling of the plurality of battery cells 121. The plurality of pads 122 may isolate the plurality of battery cells 121 from each other. According to embodiments, each of the plurality of battery cells 121 may include polyurethane (PU). According to embodiments, each of the plurality of battery cells 121 may include a fire-resistant material such as silicone.

According to embodiments, each of the plurality of pads 122 and two banks may be alternately arranged. According to embodiments, two of the plurality of banks may be interposed between neighboring pads 122. According to other embodiments, only one bank or three or more banks may be interposed between neighboring pads 122.

The first cross-beam 125a and the second cross-beam 125b of each of the battery cell assemblies 120_1 to 120_6 may be spaced apart from each other with the plurality of battery cells 121 interposed therebetween. The first cross-beam 125a and the second cross-beam 125b may cover the plurality of battery cells 121. The first cross-beam 125a and the second cross-beam 125b may horizontally support the plurality of battery cells 121. The first cross-beam 125a and the second cross-beam 125b may be fixed to the plurality of battery cells 121 via an adhesive material or the like.

According to embodiments, the first cross-beam 125a and the second cross-beam 125b may have different and complementary shapes. For example, the second cross-beam 125b of each of the battery cell assemblies 120_1 to 120_6 may be coupled to the first cross-beam 125a of a subsequent one of the battery cell assemblies 120_1 to 120_6. For example, the second cross-beam 125b of the battery cell assembly 120_1 may be coupled to the first cross-beam 125a of the battery cell assembly 120_2.

The first cross-beam 125a and the second cross-beam 125b that are coupled to each other may form a cross-beam assembly CBA. The first cross-beam 125a and the second cross-beam 125b of each of cross-beam assemblies CBA may be engaged with each other. The first cross-beam 125a and the second cross-beam 125b of each of the cross-beam assemblies CBA may be in contact with each other. Each of the cross-beam assemblies CBA may extend in the Y-axis direction.

The first cross-beam 125a of the battery cell assembly 120_1 adjacent to the side wall 114 may be coupled to a supporting beam 117a on the base plate 111. The second cross-beam 125b of the battery cell assembly 120_3 adjacent to the side wall 115 may be coupled to a supporting beam 117b on the second cross-beam 125b. Similarly, the first cross-beam 125a of the battery cell assembly 120_6 adjacent to the side wall 115 may be coupled to the supporting beam 117a on the base plate 111. The second cross-beam 125b of the battery cell assembly 120_4 adjacent to the side wall 115 may be coupled to the supporting beam 117b on the second cross-beam 125b.

The center beam 116 may extend in the X-axis direction. The center beam 116 may overlap a central area of the base plate. The center beam 116 may isolate the battery cell assemblies 120_1, 120_2, and 120_3 from the battery cell assemblies 120_4, 120_5, and 120_6. The center beam 116 may be interposed between the battery cell assemblies 120_1, 120_2 and 120_3 and the battery cell assemblies 120_4, 120_5 and 120_6.

In the present example, the plurality of battery cell assemblies 120_1 to 120_6 are arranged in two rows and three columns. Accordingly, the plurality of battery cell assemblies 120_1 to 120_6 may be arranged in a 3*2 array. Those of ordinary skill in the art will be easily derive a battery pack including the plurality of battery cell assemblies 120-1 to 120-6 arranged in an MxN array, based on the above description. Here, M and N are each an integer of 2 or more.

The plurality of fire-resistant sheets 130 may be on the plurality of battery cell assemblies 120_1 to 120_6. The plurality of upper covers 140 may be on the plurality of fire-resistant sheets 130. The plurality of upper covers 140 may cover the plurality of battery cell assemblies 120_1 to 120_6. The plurality of fire-resistant sheets 130 may be interposed between the plurality of upper covers 140 and the plurality of battery cell assemblies 120_1 to 120_6.

Each of the plurality of upper covers 140 may include an insulating material. For example, each of the plurality of upper covers 140 may include fire-resistant plastic. According to other embodiments, each of the plurality of upper covers 140 may include a metal such as aluminum and stainless steel. The plurality of upper covers 140 may overlap the plurality of battery cell assemblies 120_1 to 120_6 in the Z-axis direction. The plurality of upper covers 140 may be substantially parallel to the mounting surface 111M of the base plate 111. The plurality of upper covers 140 may be substantially perpendicular to the Z-axis direction.

The plurality of upper covers 140 may be interposed between the plurality of battery cell assemblies 120_1 to 120_6 and the lid 150. The plurality of upper covers 140 may be spaced apart from the lid 150 in the Z-axis direction. A space between the plurality of upper covers 140 and the lid 150 may be an exhaust passage.

Each of the plurality of upper covers 140 may include a plurality of exhaust holes 140H exposing portions of a corresponding one of the plurality of fire-resistant sheets 130. The plurality of exhaust holes 140H may overlap the plurality of battery cells 121 in the Z-axis direction.

Each of the plurality of exhaust holes 140H may have a rectangular shape. Corners of each of the plurality of exhaust holes 140H may have a round shape but are not limited thereto. A length of each of the plurality of exhaust holes 140H in the X-axis direction may be different from a length of each of the plurality of exhaust holes 140H in the Y-axis direction. The length of each of the plurality of exhaust holes 140H in the X-axis direction may be less than the length of each of the plurality of exhaust holes 140H in the Y-axis direction.

The length of each of the plurality of exhaust holes 140H in the Y-axis direction may be different from a length of each of the plurality of battery cells 121 in the Y-axis direction. The length of each of the plurality of exhaust holes 140H in the Y-axis direction may be less than the length of each of the plurality of battery cells 121 in the Y-axis direction. Accordingly, each of the plurality of battery cells 121 may overlap two or more (e.g., three) exhaust holes 140H in the Z-axis direction.

The length of each of the plurality of exhaust holes 140H in the X-axis direction may be different from a length of each of the plurality of battery cells 121 in the X-axis direction. The length of each of the plurality of exhaust holes 140H in the X-axis direction may be greater than the length of each of the plurality of battery cells 121 in the X-axis direction. Accordingly, the plurality of exhaust holes 140H may overlap portions of two or more (e.g., six) battery cells 121 in the Z-axis direction. In the present example, six battery cells 121 corresponding to two banks may be present between the pads 122 or between the pads 122 and the cross-beams 125a and 125b, and each of the plurality of exhaust holes 140H may overlap portions of the six battery cells 121 in the Z-axis direction.

Each of the plurality of fire-resistant sheets 130 may include a fire-resistant material, for example, mica. Each of the plurality of fire-resistant sheets 130 may have low thermal conductivity and a high ignition point.

Each of the plurality of fire-resistant sheets 130 may include a plurality of opening guides 130G overlapping the plurality of exhaust holes 140H. Each of the plurality of opening guides 130G may have relatively low physical strength. When a thermal runaway event occurs in one of the plurality of battery cell assemblies 120_1 to 120_6, the plurality of opening guides 130G overlapping the plurality of exhaust holes 140H may be easily broken and thus an exhaust path of a high-temperature gas through the plurality of exhaust holes 140H may be provided.

Here, the thermal runaway event of the plurality of battery cell assemblies 120_1 to 120_6 is a state in which a change of temperature of the plurality of battery cell assemblies 120_1 to 120_6 accelerates the change of temperature, i.e., uncontrollable positive feedback. A temperature of the plurality of battery cell assemblies 120_1 to 120_6 that are in a thermal runaway state sharply increases and a large amount of high-pressure gas and combustion debris are discharged.

Each of the plurality of opening guides 130G may include first to fifth dashed lines 130D1, 130D2, 130D3, 130D4 and 130D5 (hereinafter, the first to fifth dashed lines 130D1 to 130D5). According to embodiments, each of the first to fifth dashed lines 130D1 to 130D5 may include a plurality of line segments arranged along a second direction.

According to embodiments, the first to fifth dashed lines 130D1 to 130D5 may be substantially the same. Accordingly, the line segments of each of the first to fifth dashed 130D1 to 130D5 may be substantially the same. Lengths of and distances between the line segments of the first to fifth dashed lines 130D1 to 130D5 may be substantially the same.

The first dashed line 130D1 may be interposed between the second and third dashed lines 130D2 and 130D3. The fourth dashed line 130D4 may be spaced apart from the first dashed line 130D1 with the second dashed line 130D2 interposed therebetween. The fifth dashed line 130D5 may be spaced apart from the first dashed line 130D1 with the third dashed line 130D3 interposed therebetween.

The fourth dashed line 130D4 may overlap a boundary between a first battery cell 121 and a second battery cell 121 in the Z-axis direction among the six battery cells 121 overlapping the exhaust holes 140H. The second dashed line 130D2 may overlap a boundary between the second battery cell 121 and a third battery cell 121 in the Z-axis direction among the six battery cells 121 overlapping the exhaust holes 140H. The first dashed line 130D1 may overlap a boundary between the third battery cell 121 and a fourth battery cell 121 in the Z-axis direction among the six battery cells 121 overlapping the exhaust holes 140H. The third dashed line 130D3 may overlap a boundary between the fourth battery cell 121 and a fifth battery cell 121 in the Z-axis direction among the six battery cells 121 overlapping the exhaust holes 140H. The fifth dashed line 130D5 may overlap a boundary between the fifth battery cell 121 and a sixth battery cell 121 in the Z-axis direction among the six battery cells 121 overlapping the exhaust holes 140H.

Each of the plurality of exhaust holes 140H may overlap the six battery cells 121, and the first to fifth dashed lines 130D1 to 130D5 may divide a portion of the fire-resistant sheet 130 overlapping each of the plurality of exhaust holes 140H into six regions. Accordingly, when a thermal runaway event occurs only in some of the plurality of battery cells 121, only a corresponding portion of the fire-resistant sheet 130 may be opened, and the other battery cells 121 that are in a normal state may be blocked from a high-temperature gas and dust discharged through the open portion of the fire-resistant sheet 130.

For example, when the thermal runaway event occurs in the first battery cell 121 overlapping the exhaust hole 140H, only a portion of the fire-resistant sheet 130 between the fourth dashed line 130D4 and an edge of the exhaust hole 140H parallel to the Y-axis direction may be broken.

For example, when the thermal runaway event occurs in the second battery cell 121 overlapping the exhaust hole 140H, only a portion of the fire-resistant sheet 130 between the second dashed line 130D2 and the fourth dashed line 130D4 may be broken.

For example, when the thermal runaway event occurs in the third battery cell 121 overlapping the exhaust hole 140H, only a portion of the fire-resistant sheet 130 between the first dashed line 130D1 and the second dashed line 130D2 may be broken.

For example, when the thermal runaway event occurs in the fourth battery cell 121 overlapping the exhaust hole 140H, only a portion of the fire-resistant sheet 130 between the first dashed line 130D1 and the third dashed line 130D3 may be broken.

For example, when the thermal runaway event occurs in the fifth battery cell 121 overlapping the exhaust hole 140H, only a portion of the fire-resistant sheet 130 between the third dashed line 130D3 and the fifth dashed line 130D5 may be broken.

For example, when the thermal runaway event occurs in the sixth battery cell 121 overlapping the exhaust hole 140H, only a portion of the fire-resistant sheet 130 between the fifth dashed line 130D5 and the edge of the exhaust hole 140H parallel to the Y-axis direction may be broken.

The lid 150 may be coupled to the side walls 112, 113, 114 and 115. The lid 150 may be fixed to the side walls 112, 113, 114, and 115 by a mechanical means such as a bolt. The lid 150 may cover elements, such as the battery cell assemblies 120_1 to 120_6 and electronic components, inside the battery pack 100. A gasket may be interposed between the lid 150 and the side walls 112, 113, 114, and 115. The gasket may provide a liquid seal to the battery pack 100.

The battery pack 100 may further include electronic components. The electronic components may include an electronic device required to drive a battery pack. The electronic components may be on an electronic component mounting region EMR.

The electronic components may include, for example, a battery management system (BMS). The BMS may be configured to monitor, balance, and control the battery pack 100. The monitoring of the battery pack 100 may include measuring voltages and currents of certain nodes inside the plurality of battery cell assemblies 120_1 to 120_6 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120_1 to 120_6. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120_1 to 120_6 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120_1 to 120_6. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120_1 to 120_6 and an external load (e.g., a motor of a vehicle), when abnormal voltage such as voltage surges occurs.

The battery pack 100 may further include a plurality of exhaust devices. The plurality of exhaust devices may be installed on one of the lid 150 and the side walls 112, 113, 114, and 115. The plurality of exhaust devices may provide a path for discharging a high-temperature gas from the inside of the battery pack 100 to the outside when the thermal runaway event occurs in some of the plurality of battery cell assemblies 120_1 to 120_6. Accordingly, thermal propagation may be delayed, and the stability of the battery pack 100 may be improved.

### (Second Embodiment)

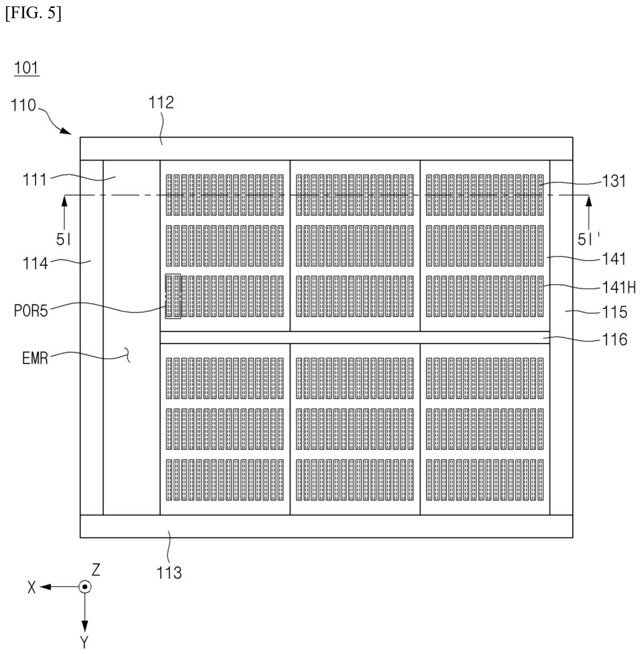

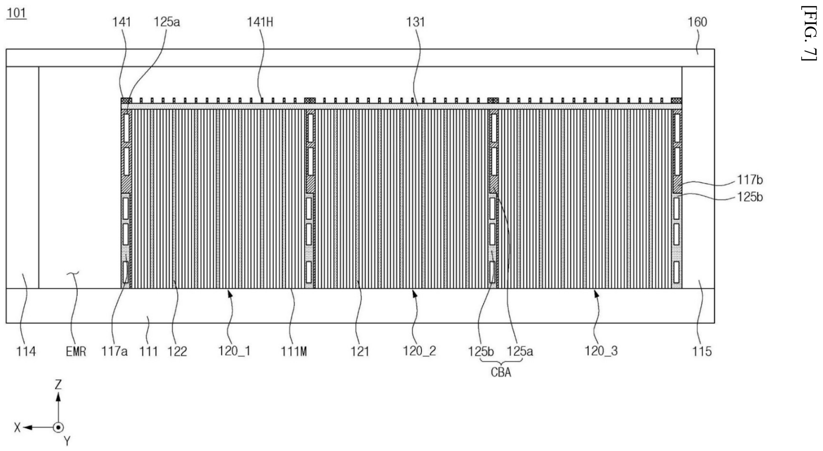

FIG. 5 is a plan view for describing a battery pack 101 according to embodiments. In FIG. 5, the lid 150 (see FIG. 7) is omitted.

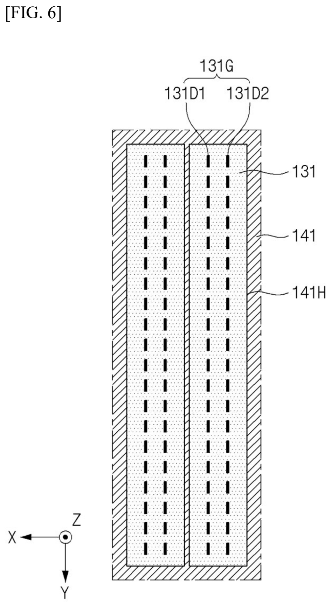

FIG. 6 is an enlarged partial plan view of a part POR5 of FIG. 5.

FIG. 7 is a cross-sectional view taken along line 5I-5I' of FIG. 5.

Referring to FIGS. 5 to 7, the battery pack 101 may include a housing 110, a plurality of battery cell assemblies 120_1 to 120_6 (see FIG. 2), fire-resistant sheets 131, upper covers 141, and the lid 150. The battery pack 101 is a final form of a battery system to be mounted in a mobility or the like.

The housing 110, the plurality of battery cell assemblies 120_1 to 120_6 (see FIG. 2), and the lid 150 are substantially the same as those described above with reference to FIGS. 1 to 6 and thus redundant description thereof is omitted here.

The fire-resistant sheets 131 may be on the plurality of battery cell assemblies 120_1 to 120_6 (see FIG. 2). The upper covers 141 may be on the fire-resistant sheets 131. The upper covers 141 may cover the plurality of battery cell assemblies 120_1 to 120_6 (see FIG. 2). The fire-resistant sheets 131 may be interposed between the upper covers 141 and the plurality of battery cell assemblies 120_1 to 120_6 (see FIG. 2).

Each of the upper covers 141 may include an insulating material. For example, each of the upper covers 141 may include fire-resistant plastic. According to other embodiments, each of the upper covers 141 may include a metal such as aluminum and stainless steel. The upper covers 141 may overlap the plurality of battery cell assemblies 120_1 to 120_6 (see FIG. 2) in the Z-axis direction.

The upper covers 141 may be interposed between the plurality of battery cell assemblies 120_1 to 120_6 (see FIG. 2) and the lid 150. The upper covers 141 may be spaced apart from the lid 150 in the Z-axis direction. A space between the upper covers 141 and the lid 150 may be an exhaust passage.

Each of the upper covers 141 may include a plurality of exhaust holes 141H exposing portions of a corresponding one of the fire-resistant sheets 131. The plurality of exhaust holes 141H may overlap the plurality of battery cells 121 in the Z-axis direction.

Each of the plurality of exhaust holes 141H may have a rectangular shape. A length of each of the plurality of exhaust holes 141H in the X-axis direction may be different from a length of each of the plurality of exhaust holes 141H in the Y-axis direction. The length of each of the plurality of exhaust holes 141H in the X-axis direction may be less than the length of each of the plurality of exhaust holes 141H in the Y-axis direction.

The length of each of the plurality of exhaust holes 141H in the Y-axis direction may be different from a length of each of the plurality of battery cells 121 in the Y-axis direction. The length of each of the plurality of exhaust holes 141H in the Y-axis direction may be less than the length of each of the plurality of battery cells 121 in the Y-axis direction. Accordingly, each of the plurality of battery cells 121 may overlap two or more (e.g., three) exhaust holes 141H in the Z-axis direction.

The length of each of the plurality of exhaust holes 141H in the X-axis direction may be different from a length of each of the plurality of battery cells 121 in the X-axis direction. The length of each of the plurality of exhaust holes 141H in the X-axis direction may be greater than the length of each of the plurality of battery cells 121 in the X-axis direction. Accordingly, the plurality of exhaust holes 141H may overlap portions of two or more (e.g., six) battery cells 121.

In the present example, six battery cells 121 corresponding to two banks may be present between pads 122 or between the pads 122 and cross-beams 125a and 125b, and the plurality of exhaust holes 141H may overlap portions of three battery cells 121 corresponding to one bank. That is, in the X-axis direction, the exhaust hole 141H and an opening guide 131G of FIG. 7 may be smaller in size than the exhaust hole 140H and the opening guide 130G of FIG. 4, thus causing a reduction of a size of the fire-resistant sheet 131 to be fully opened when a thermal runaway event occurs.

Each of the fire-resistant sheets 131 may include a fire-resistant material, for example, mica. Each of the fire-resistant sheets 131 may have low thermal conductivity and a high ignition point.

Each of the fire-resistant sheets 131 may include a plurality of opening guides 131G overlapping the plurality of exhaust holes 141H. Each of the plurality of opening guides 131G may have relatively low physical strength. When the thermal runaway event occurs in one of the plurality of battery cell assemblies 120_1 to 120_6 (see FIG. 2), the plurality of opening guides 131G overlapping the plurality of exhaust holes 141H may be easily broken and thus an exhaust path of a high-temperature gas through the plurality of exhaust holes 141H may be provided.

Each of the plurality of opening guides 131G may include first and second dashed lines 131D1 and 131D2. According to embodiments, each of the first and second dashed lines 131D1 and 131D2 may include a plurality of line segments arranged along the second direction.

According to embodiments, the first and second dashed lines 131D1 and 131D2 may be substantially the same. Accordingly, the line segments included in the first and second dashed lines 131D1 and 131D2 may be substantially the same. Lengths of and distances between the line segments of the first and second dashed lines 130D1 and 130D2 may be substantially the same.

Each of the plurality of exhaust holes 141H may overlap three battery cells 121, and the first and second dashed lines 131D1 and 131D2 may divide a portion of the fire-resistant sheet 131 overlapping each of the plurality of exhaust holes 141H into three regions. Accordingly, when a thermal runaway event occurs only in some of the plurality of battery cells 121, only a corresponding portion of the fire-resistant sheet 131 may be opened, and the other battery cells 121 that are in a normal state may be blocked from a high-temperature gas and dust discharged through the open portion of the fire-resistant sheet 130.

For example, when the thermal runaway event occurs in a first battery cell 121 overlapping the exhaust hole 141H, only a portion of the fire-resistant sheet 131 between the first dashed line 131D1 and an edge of the exhaust hole 141H parallel to the Y-axis direction may be broken.

For example, when the thermal runaway event occurs in a second battery cell 121 overlapping the exhaust hole 141H, only a portion of the fire-resistant sheet 131 between the first dashed line 131D1 and the second dashed line 131D2 may be broken.

For example, when the thermal runaway event occurs in a third battery cell 121 overlapping the exhaust hole 141H, only a portion of the fire-resistant sheet 131 between the second dashed line 131D2 and the edge of the exhaust hole 141H parallel to the Y-axis direction may be broken.

### (Third Embodiment)

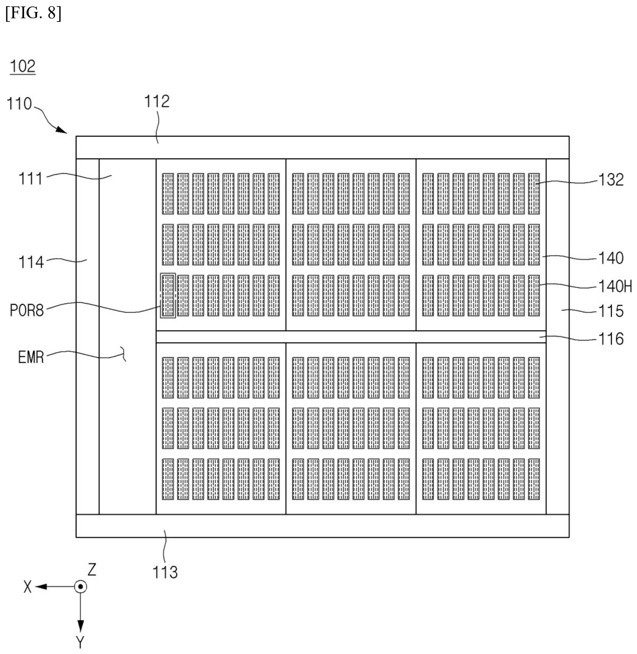

FIG. 8 is a plan view for describing a battery pack 102 according to embodiments. In FIG. 8, the lid 150 (see FIG. 4) is omitted.

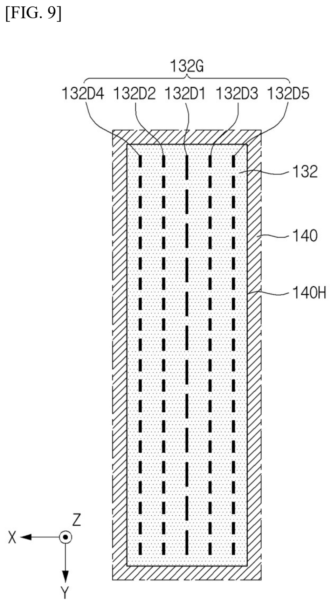

FIG. 9 is an enlarged partial plan view of a part POR8 of FIG. 8.

Referring to FIGS. 8 and 9, the battery pack 102 may include a housing 110, a plurality of battery cell assemblies 120_1 to 120_6 (see FIG. 2), fire-resistant sheets 132, upper covers 140, and the lid 150. The battery pack 102 is a final form of a battery system to be mounted in a mobility or the like.

The housing 110, the plurality of battery cell assemblies 120_1 to 120_6 (see FIG. 2), the upper cover 140, and the lid 150 are substantially the same as those described above with reference to FIGS. 1 to 4 and thus redundant description thereof is omitted here.

Each of the fire-resistant sheets 132 may include a fire-resistant material, for example, mica. Each of the fire-resistant sheets 132 may have low thermal conductivity and a high ignition point.

Each of the plurality of fire-resistant sheets 132 may include a plurality of opening guides 132G overlapping a plurality of exhaust holes 140H. Each of the plurality of opening guides 132G may have relatively low physical strength. When the thermal runaway event occurs in one of the plurality of battery cell assemblies 120_1 to 120_6 (see FIG. 2), the plurality of opening guides 132G overlapping the plurality of exhaust holes 140H may be easily broken and thus an exhaust path of a high-temperature gas through the plurality of exhaust holes 140H may be provided.

Each of the plurality of opening guides 132G may include first to fifth dashed lines 132D1, 132D2, 132D3, 132D4 and 132D5 (hereinafter, the first to fifth dashed lines 132D1 to 132D5). According to embodiments, each of the first to fifth dashed lines 132D1 to 132D5 may include a plurality of line segments arranged in the second direction.

The line segments of the first dashed line 132D1 may be referred to as first line segments. The line segments of the second dashed line 132D2 may be referred to as second line segments. The line segments of the third dashed line 132D3 may be referred to as third line segments. The line segments of the fourth dashed line 132D4 may be referred to as fourth line segments. The line segments of the fifth dashed line 132D5 may be referred to as fifth line segments.

According to embodiments, the first dashed line 132D1 may be different from the second to fifth dashed lines 132D2, 132D3, 132D4 and 132D5 (hereinafter, the second to fifth dashed lines 132D2 to 132D5). According to embodiments, each of the first line segments may be different from each of the second to fifth line segments.

According to embodiments, a length of each of the first line segments may be different from a length of each of the second to fifth line segments. According to embodiments, the length of each of the first line segments may be greater than the length of each of the second to fifth line segments.

According to embodiments, the second to fifth dashed lines 132D2, 132D3, 132D4, and 132D5 may be substantially the same. Accordingly, lengths and distances between the second to fifth line segments may be substantially the same.

The first dashed line 132D1 may be interposed between the second and third dashed lines 132D2 and 132D3. The fourth dashed line 132D4 may be spaced apart from the first dashed line 132D1 with the second dashed line 132D2 interposed therebetween. The fifth dashed line 132D5 may be spaced apart from the first dashed line 132D1 with the third dashed line 132D3 interposed therebetween.

Each of the plurality of exhaust holes 140H may overlap six battery cells 121, and the first to fifth dashed lines 132D1 to 132D5 may divide a portion of the fire-resistant sheet 132 overlapping each of the plurality of exhaust holes 140H into six regions. Accordingly, when a thermal runaway event occurs only in some of the plurality of battery cells 121 (see FIG. 4), only a corresponding portion of the fire-resistant sheet 132 may be opened, and the other battery cells 121 that are in a normal state may be blocked from a high-temperature gas and dust discharged through the open portion of the fire-resistant sheet 132.

Furthermore, the first dashed line 132D1 may limit the open portion of the fire-resistant sheet 132 to approximately half of each of the plurality of exhaust holes 140H. According to embodiments, physical strength of the first dashed line 132D1 may be different from physical strength of the second to fifth dashed lines 132D2 to 132D5 and thus a maximum area of the fire-resistant sheet 132 to be opened may be adjusted through an arrangement of the first dashed line 132D1. Those of ordinary skill in the art will be able to easily derive an embodiment in which the opening guide 132G includes two or more first dashed lines 132D1, based on the above description.

The present disclosure has been described above in more detail with reference to the drawings, the embodiments, etc. However, the configurations illustrated in the drawings or embodiments described in the present specification are only embodiments of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate;
a battery cell assembly provided on the base plate and including a plurality of battery cells;
an upper cover provided on the battery cell assembly and including a plurality of exhaust holes; and
a fire-resistant sheet interposed between the upper cover and the battery cell assembly and including a plurality of opening guides overlapping the plurality of exhaust holes,
wherein each of the plurality of opening guides includes first to third dashed lines spaced apart from one another in a first direction,
each of the first to third dashed lines extends in a second direction perpendicular to the first direction, and
the first dashed line is different from the second and third dashed lines.

2. The battery pack of claim 1, wherein the first dashed line is interposed between the second and third dashed lines.

3. The battery pack of claim 1, wherein the first dashed line includes a plurality of first line segments arranged in the second direction,
the second dashed line includes a plurality of second line segments arranged in the second direction, and
the third dashed line includes a plurality of third line segments arranged in the second direction.

4. The battery pack of claim 3, wherein a length of each of the plurality of first line segments is different from a length of each of the plurality of second line segments.

5. The battery pack of claim 3, wherein a length of each of the plurality of first line segments is greater than a length of each of the plurality of second line segments.

6. The battery pack of claim 3, wherein a length of each of the plurality of first line segments is different from a length of each of the plurality of third line segments.

7. The battery pack of claim 3, wherein a length of each of the plurality of first line segments is greater than a length of each of the plurality of third line segments.

8. The battery pack of claim 3, wherein a length of each of the plurality of second line segments is equal to a length of each of the plurality of third line segments.

9. The battery pack of claim 3, wherein each of the plurality of opening guides further includes fourth and fifth dashed lines spaced apart from each other with the first to third dashed lines between the fourth and fifth dashed lines,
wherein the fourth dashed line includes a plurality of fourth line segments arranged in the second direction, and
the fifth dashed line includes a plurality of fifth line segments arranged in the second direction.

10. The battery pack of claim 9, wherein a length of each of the plurality of fourth line segments is equal to a length of each of the plurality of second line segments.

11. The battery pack of claim 9, wherein a length of each of the plurality of first line segments is greater than a length of each of the plurality of fourth line segments.

12. The battery pack of claim 9, wherein a length of each of the plurality of fifth line segments is equal to a length of each of the plurality of third line segments.

13. The battery pack of claim 9, wherein a length of each of the plurality of first line segments is greater than a length of each of the plurality of fifth line segments.
